(19) Europäisches Patentamt
European Patent Office
Office européen des brevets

(11) **EP 2 956 583 B1**

(12) **EUROPEAN PATENT SPECIFICATION**

(45) Date of publication and mention of the grant of the patent:
**23.08.2017 Bulletin 2017/34**

(21) Application number: **14707462.9**

(22) Date of filing: **18.02.2014**

(51) Int Cl.:
***E01C 13/08*** *(2006.01)*

(86) International application number:
**PCT/IB2014/059065**

(87) International publication number:
**WO 2014/125459 (21.08.2014 Gazette 2014/34)**

(54) **TURF SYSTEM FOR SPORT SURFACES AND GARDENING SURFACES AND METHOD FOR CULTIVATING TURF ACCORDING TO SAID SYSTEM**

RASENSYSTEM FÜR SPORTFLÄCHEN UND GARTENFLÄCHEN SOWIE VERFAHREN ZUR KULTIVIERUNG VON RASEN NACH DIESEM SYSTEM

SYSTÈME DE GAZON POUR SURFACES DE SPORT ET SURFACES DE JARDINAGE ET PROCÉDÉ POUR CULTIVER UN GAZON SELON LEDIT SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2013 ES 201330209**

(43) Date of publication of application:
**23.12.2015 Bulletin 2015/52**

(73) Proprietor: **Profesional Sportsverd Futbol S. L.**
**08915 Badalona (ES)**

(72) Inventors:
• **PALAU GEA, Juan José**
  **E-08915 Badalona (ES)**
• **PALAU CABALLERO, Josep**
  **E-08915 Badalona (ES)**

(74) Representative: **Oficina Ponti, SLP**
  **C. de Consell de Cent 322**
  **08007 Barcelona (ES)**

(56) References cited:
**DE-A1- 3 723 364     FR-A1- 2 932 196**
**US-A- 5 489 317     US-A1- 2001 007 700**

## Description

The present application relates to a mixed turf for surfaces comprising natural-origin turf and synthetic-origin turf which are integrated into a single system. The same application also relates to an improved natural turf system for sports surfaces.

## Background of the invention

It is a known fact that the turf of natural origin of sports surfaces and gardening surfaces requires a lot of maintenance work. In the particular case of surfaces where a sport is practiced, maintenance of the natural turf must be carried out with a very high frequency, and in spite of everything, a lot of problems tend to appear as a result of the wear and compaction suffered by the surface's plants and particles after several hours of use.

In order to reduce the problems of natural turf maintenance, some sports pitches use synthetic origin turf. This turf presents the advantage that it suffers little wear and requires very low maintenance. However, it is a known fact that turf of synthetic origin lacks the biomechanical properties offered by turf of natural origin for practicing sports (resilience, vertical deformation, etc...).

On the market, there is the so-called mixed turf which combines turf of natural origin and turf of synthetic origin. The existing mixed turf is obtained basically by making the seeds of natural turf plants grow in a layer of soil disposed on a base for supporting the synthetic fibres of the artificial turf. There is also another system wherein synthetic fibres are inserted on an already implanted natural turf.

Document US5489317 discloses a synthetic turf positioned atop a foundation which includes synthetic grass blades secured to a backing. Natural grass is planted in the surface layer of material supported by the backing and intermixed with the synthetic grass blades. According to this document, the improved surface includes a rubber mat having rubber particles adhered together by urethane, latex or other binding materials to create a flexible, perforated cushion. The rubber mat is positioned intermediate the foundation and the synthetic turf.

The main objective of the mixed turf system is to benefit from the properties of the turf of natural origin, while reducing the maintenance work on said natural turf thanks to the presence of the fibres of the turf of synthetic origin. However, it is known that existing mixed turf systems present numerous drawbacks.

For example, it has been verified that the presence of the fibres of synthetic turf makes the aeration works required for cultivating the natural turf more difficult. These aeration works are necessary to reinstate the compaction that the surface suffers with use and usually consist of spiking the crop profile of the natural turf. In mixed turf, this "spiking" causes the base supporting the synthetic fibres to break and even breaking of the fibres themselves, meaning that, in practice, the synthetic fibres come loose and the turf becomes degraded.

Another problem of existing mixed turf systems lies in the fact that the entire cultivation profile of the natural turf plants is disposed on the base that supports the synthetic fibres, meaning that it is very exposed to the action of lateral tearing forces which causes the turf to lift and divots to appear. These defects make play more difficult and the appearance of injuries on sports pitches increases. Also, it has been noted that the scarification works on the natural turf required in order to eliminate "thatch", or layer of decomposing organic matter from the carpet formed by the natural turf, are very difficult to carry out on the cultivation profile without spoiling or tearing the synthetic fibres of the artificial turf.

In practice, the aforesaid maintenance problems result in obtaining a mixed turf which is not suitable for practicing sports, given that the natural turf eventually comes lose in determined zones and/or dies due to the lack of aeration caused by the impossibility of adequately performing the work of spiking and scarification.

In light of the above, there is an obvious need to obtain an improved natural turf for sports and gardening surfaces, which is easy to maintain, or a mixed turf that resolves the problems mentioned above by integrating the two types of turf into a single system so as to obtain a genuinely hybrid turf.

## Description of the invention

The objective of the present invention is to resolve the aforementioned drawbacks, by developing a turf system for sports surfaces and gardening surfaces that is very easy to maintain and moreover substantially improves the performance of sports surfaces by enabling a higher number of hours of use of such grounds.

In line with this objective, according to a first aspect the present invention provides a turf system for sports surfaces and gardening surfaces, which comprises a turf of synthetic origin and a turf of natural origin, said turf of synthetic origin and said turf of natural origin being disposed on a substantially elastic permeable substrate, said elastic substrate being configured in such a way that it allows the roots of said natural turf to pass through to a growing layer disposed in a lower position. The system is characterized in that said elastic substrate defines in the profile of the system a layer having a thickness comprised between 0.005 m to 0.020 m, and in that said elastic substrate is configured on the basis of a three-dimensional mesh which is manufactured with elastic material of polymeric origin, said elastic substrate being capable of absorbing the energy from shocks practiced on said grounds to avoid compaction of said growing layer of roots disposed in a lower position.

Unlike existing turf systems, the turf system of the present invention presents the advantage that it is possible to do without the spiking operation for aeration of the growing layer of the natural turf and also without conventional scarification. Also, the proposed system guarantees an adequate aeration of the crop profile, whether in mixed turf or natural turf. Aeration results in less compaction and higher degradation of the biomass ("less thatch") which favours obtaining a turf with ideal properties for practicing sports, given that it favours the stability of the land (less mud formation, formation of fewer puddles due to lack of drainage, etc...).

Indeed thanks to the presence of said elastic permeable substrate which allows the roots to pass to a growing layer below, the growing layer of the roots of the natural turf plants situated in a lower position is not compacted in the same way as occurs in the existing systems. In the claimed system, preferably in a mixed turf system, the elastic substrate absorbs the shocks made on the ground and guarantees a correct aeration of the zone where the roots grow in a lower layer, which has been verified not to require the spiking which breaks the synthetic fibres.

In fact, it has been verified that the claimed system guarantees that the properties of shock-absorption and rotational traction of the sports surface are at least equal to the minimum values required for turf grounds without having to perform the "spiking" (aeration) which breaks the fibres. These minimum values are established in European Norm EN 15330-1:2005 for turfs of synthetic origin (Surfaces for Sport Areas - Specification for synthetic turf), given that the international football federation (FIFA) up to the present moment does not demand quality certificates for pitches with turf of natural origin.

European Norm EN-15330-1:2005 for sports surfaces - artificial turf

| European Norm EN-15330-1 for sports surfaces made of artificial turf | |
|---|---|
| PROPERTY | Values |
| Vertical ball rebound (%), -EN12235 | 45-75 |
| Ball roll (m), - EN12234 | 4-10 |
| Shock absorption (%),- EN14808 | 55-70 |
| Rotational traction (Nm), - EN15301-1 | 25-50 |

Another advantage of the turf of the present invention lies in the fact that, because the growing layer of the turf plants is in a lower position than that of the synthetic turf, said growing layer, and with it the roots of the natural turf plants, are protected from the forces that cause tear or lift. In this way, the system is capable of guaranteeing suitable qualities of the land for sports games.

Preferably, the claimed system comprises a layer of filler soil disposed on a base for supporting the fibres of synthetic turf, with it being possible to sow the seeds of natural turf on said layer of filler soil, the base for supporting the synthetic fibres being configured in such a way that it allows the roots of the natural turf to pass through to the elastic substrate disposed in a lower position.

This layer of filler soil disposed on the base for supporting the synthetic turf fibres presents the advantage of stabilising the synthetic fibres and also, acts as a substrate for supporting the seeds of the natural turf plants.

Advantageously, the base for supporting the synthetic fibres is configured by a substantially laminar structure made of synthetic material which is provided with holes or perforations for the passage of the roots of natural turf plants. This synthetic material may be, for example, a material derived from the family of polyolefins (polyethylene, polypropylene, etc...). In terms of the synthetic fibres, these may be of the monofilament, fibrillated or mixed type woven onto the supporting base. The artificial turf may also include textured or curled synthetic fibres. According to a preferred embodiment, the claimed system comprises a sheet that is permeable to water which is placed between said layer of filler soil and said substantially elastic substrate, said sheet being configured in such a way that it prevents the passage of particles of filler soil to the elastic substrate disposed in a lower position, said fabric being capable of allowing the roots of said natural turf to pass through it.

In this way, thanks to this permeable sheet, the pores of the elastic substrate do not become blocked with particles from the upper layer of filler soil, ensuring that the air content of said substrate is maintained, making it similar to a hydroponic cultivation substrate which reduces the risk of proliferation of fungi and pathogenic bacteria. Also, this sheet prevents insect larvae from reaching the root zone of the natural turf plants.

This sheet may be, for example, a sheet configured in the form of a mesh that prevents the passage of sand particles of the filler soil with a particular grain size.

Advantageously, said permeable sheet is a geotextile fabric which is configured to allow the passage of the roots of said natural turf, and preferably, said geotextile fabric comprises a mesh of fibres provided with pores having a diameter of equal to or less than 0.0001 m (100 $\mu$m), said pores being adequate for allowing the passage of the roots and preventing the passage of particles of soil capable of blocking the pores of the elastic substrate located in a lower position.

Again advantageously, said geotextile fabric is a non-woven fabric, preferably a non-woven fabric with a fibre density that is equal to or less than 0.3 Kg/m$^2$ (300 g/m$^2$). The fibres of the non-woven fabric may be natural fibres or synthetic fibres, such as for example, polyester fibres. Synthetic fibres are preferred over natural fibres, given that they prevent the passage of larvae to the growing layer below more effectively.

It has been verified that a density of fibres of the geotextile fabric that is equal to or less than 300 g/m$^2$ is adequate for allowing the passage of the roots and preventing at the same time the passage of the particles of filler soil.

Nonetheless, instead of a geotextile fabric, it would also be possible to use, for example, a mesh made of an extruded polymer (HDPE - high density polyethylene) formed by regular grid of 0.6 mm x 1 mm, weighing approximately 300 g/m$^2$.

With regard to the aforementioned elastic substrate, , said substrate defines in the profile of the system a layer having a thickness comprised between 0.005 m (5 mm) and 0.020 m (20 mm) and, advantageously, the apparent bulk density of this layer of elastic substrate, when protected by the permeable sheet of fabric, is equal to or less than 500 Kg/m$^3$ in order to guarantee an optimum content of air.

This apparent bulk density is similar to that provided by substrates used in hydroponic cultivation, such as, for example, peat or perlite. In this way, the roots of the natural turf plants that pass through the substrate to access the lower growing layer make use of an important airflow which improves their biological processes. Another advantage of the high air content of this substrate lies in the fact that it provides an effect of thermal insulation which reduces the impact of temperature changes on the surface. This helps to save water since the evapotranspiration of the natural turf is reduced.

Also, advantageously, said substantially elastic permeable substrate is configured in such a way that it is capable of absorbing the energy of shocks made on the surface due to the effect of a ball or a similar object, in particular said substrate is configured in such a way that it makes it possible to obtain a mixed or natural turf with a shock-absorption capacity comprised within the range of values (55%-70%) established by the aforementioned European Norm, according to test UNE-EN 14808:2005 (see, figure 7).

The vertical rebound capacity of the elastic substrate has also been verified by means of test UNE-EN 122235. This test evaluates the recovery in height of an approved football once it has been allowed to drop from a height of 2 m, as indicated in the method's instructions. The result of the recovery in height of the ball in respect of a concrete floor was 120 cm measured directly on the concrete, whereas the height recovered after bouncing directly on the elastic substrate was 80 cm, which corresponds to a vertical rebound of the ball on the elastic substrate (only on the substrate, not the turf) of 40% This value is very close to the range of values that is required for turf of synthetic origin, according to European Norm EN-15330-1 mentioned above.

According to the present invention , said substantially elastic substrate is configured on the basis of a three-dimensional mesh with a thickness comprised between 0.005 m (5 mm) and 0.02 m (20 mm) which is manufactured with elastic material of polymeric origin, such as for example, polyvinyl chloride or PVC.

It has been verified that a three-dimensional mesh of elastic synthetic material, for example, a mesh of the type that defines an amorphous network of threads of elastic material, is very appropriate, given that said amorphous network provides a support for the roots of the plants which results in an improved grip of the turf foots and, consequently, in a lower risk of unwanted lifting of the turf on the playing field.

Preferably, said three-dimensional mesh is a mesh formed by threads of a polymeric material with elastic properties. These threads are fixed or bound to each other in such a way that they determine a semi-amorphous structure with hollow spaces for allowing the passage of the roots of the plants. A mesh of this type is marketed by Notax Floor Matting with the commercial name *Vinyl loop mats.*

According to another embodiment which does not form part of the present invention, said elastic substrate is configured on the basis of a slab of elastic material having a determined thickness, which is provided with through-holes for passage of the roots of the turf plants. The material of the slab may be an aggregate of rubber type SBR (styrene-butadiene) with polyurethane or any other binder, such as for example, the material manufactured by the company Berleburguer Shaumstoffwerk. It may also be a polyurethane foam having an appropriate density bound by means of the use of a reagent such as isocyanate or any other, which generates the required properties, such as for example the material manufactured by the company Recticel Internacional. Another type of material may be expanded polyethylene or a similar plastic material, unified by means of a method that generates the required properties, such as for example, the material manufactured by the companies Trocellen and Shmitz Foams Products.

Alternatively, instead of the aforementioned slabs of elastic material, the elastic layer of the system may be configured by a plurality of granules of elastic material, preferably, rubber granules, with a granule size comprised between 0.8 mm and 4.5 mm for allowing the passage through of the roots of natural turf. In this way, and although the granules do not form a compact body, these may perform a function similar to that of the slabs when it comes shock-absorption and avoiding soil compaction.

According to a preferred embodiment of the system, the fibres of synthetic turf possess a height comprised between 0.015 m (15 mm) and 0.035 m (35 mm) and the layer of filler soil possesses a thickness comprised between 0.005 m (5 mm) and 0.025 m (25 mm). In this same profile, the layer of natural turf culture disposed in a lower position possesses preferably, a height comprised between 0.05 m (50 mm) and 0.20 m (200 mm).

In the claimed system, the fibres of synthetic turf are disposed in a lower position meaning that from the outside the turf appears as natural turf.

According to an alternative embodiment which does not form part of the present invention, the system is not provided with synthetic fibres of turf, with only the natural turf being disposed on said substantially elastic permeable substrate. In this way, the present application provides an improved system of totally natural turf which also presents the advantage of being very easy to maintain, given that it is possible to do without the conventional operations of "spiking" and scarification.

As mentioned previously, the layer of filler soil is in reality a layer with the function of stabilising the synthetic fibres, the lower growing layer being the one that provides the nutrients for growth of the roots. Plus, the reduced thickness of this layer of filler soil reduces the possibility of larvae growth and eliminates conventional scarification operations given that the depth of the soil to be turned over is very limited. Scarification in this system is not really carried out, and is replaced by works to clear and clean said fill.

Another additional advantage of the limited thickness or depth of this layer of filler soil lies in the fact that, in the case of allowing the natural turf to die or eliminating it by means of herbicides, the field can be used with synthetic fibres only thanks to the fact that the elastic substrate will continue to provide sufficient elasticity to the ground because it is very close to the surface. In the event of requiring natural turf again it will only be necessary to sow once more.

According to the same preferred embodiment of the system, the growing layer of natural turf disposed in the lower position of the system's profile includes particles made of elastic of natural or synthetic origin, with a diameter comprised between 0.0005 m (0,5 mm) and 0.004 m (4 mm). These particles or granules of elastic material contribute to reducing compaction of the ground or sports or gardening surface.

In accordance with a second aspect, the present invention relates also to a procedure for cultivating the turf according to the system of the claims above, which comprises the stages of;

a) sowing the seeds of natural turf on a layer of filler soil disposed on a base for supporting the fibres of synthetic turf and on a substantially elastic permeable substrate, which is configured on the basis of a three-dimensional mesh, said elastic substrate defining in the profile of the system a layer having a thickness comprised between 0.005 m and 0.020 m,

b) allowing the natural turf to grow to a height that is equal to or higher than the height of the synthetic turf fibres, the roots of said natural turf being capable of passing through the base for supporting the synthetic turf fibres and passing through said elastic substrate in order to reach a growing layer disposed in a lower position,

c) cutting the natural turf in order to keep the height of said natural turf at least equal to the height of the synthetic turf fibres, in particular, at a height comprised between 0.015 ,m (15 mm) and 0.04 m (40 mm), depending on the use to be given to the surface.

The proposed mixed turf system presents the advantage of allowing the natural turf to be cut comfortably, without danger of breakage, because the roots of the turf plants are protected under the base for supporting the synthetic fibres, in a growing layer below.

Advantageously, the natural turf is cut to a height above the height of the synthetic fibres of artificial turf in order to provide the surface with the appearance of totally natural turf and biomechanical properties that are very similar to those of natural turf.

Preferably, in stage a), the sowing of the seeds is carried out on a layer of filler soil having a thickness comprised between 0.005 m (5 mm) and 0.025 m (25 mm) which is separated from said substantially elastic substrate by a permeable sheet that prevents passage of soil particles, the roots of the natural turf being capable of passing through said permeable sheet to penetrate in the substrate while said substrate remains free of soil particles.

The sowing of seeds of natural turf is carried out on a layer of filler soil with a reduced thickness which is very close to the base for supporting the synthetic fibres of the artificial turf. It has been observed that the reduced thickness of this layer of filler soil drastically reduces the presence of insect larvae, and consequently, loss of plant.

Advantageously, said procedure comprises the stage of clearing and cleaning without scarifying said layer of filler soil with a thickness comprised between 0.005 m (5 mm) and 0.025 m (25 mm).

As mentioned, the reduced thickness of the layer of filler soil eliminates the operations of scarification, reducing them to simple clearing given that the depth of the soil to be turned over is very limited.

Thanks to all of the described characteristics, the claimed mixed turf and natural turf system makes it possible to obtain sports or gardening surfaces that can be used for many more hours than the natural turf surfaces or pitches of the state of the art and which, additionally, are much easier to maintain than existing natural turf surfaces or mixed turf surfaces.

In the present invention, geotextile fabric will be understood to mean a permeable and flexible sheet of preferably synthetic fibres, preferably made of polypropylene and polyester, which can be manufactured in non-woven or woven form, depending on the required resistance and filtration capacity. The geotextile fabric used in the present invention is a geotextile fabric with a density of fibres that is modified in order to allow passage of the roots of the natural turf plants.

**Brief description of the drawings**

For a better understanding of what has been described above, a set of drawings is attached where, schematically and by way of a non-limiting example only, two practical cases of embodiment are represented.

Figure 1 is a perspective view of a profile or cross-section of a first embodiment of the system of the present invention.

Figure 2 shows a close-up of the profile of the section of figure 1.

Figure 3 is a perspective view of a profile or section of an embodiment of the system that does not form part of the present invention.

Figures 4 and 5 show a view in perspective of two types of slabs of elastic material which do not form part of the present claimed invention. Each one of these slabs is capable of configuring a substantially elastic permeable substrate..

Figure 6 shows a view in perspective of a three-dimensional mesh formed by threads of a polymeric material with elastic properties. This three-dimensional mesh can configure the system's layer of substantially elastic permeable substrate.

Figure 7 shows an image representing the method to determine the shock absorption capacity of a surface area according to the European standard EN 14808 (see, text below).

**FIG.7**

**3.3.1 Force Reduction**

The force reduction is determined according to the European standard EN 14808 Surfaces for sports areas - Determination of shock absorption. The purpose of this method is to compare the tested surface to a completely rigid floor construction, i.e. a concrete floor of a significant mass. The method measures how much of the impact force that is absorbed of the floor construction. When testing, a mass of $20 \pm 0.1$ kg is dropped from a height of $55 \pm 0.25$ mm on to a spiral spring with a spring rate of $2\,000 \pm 60$ N/mm. The spring rests on a load cell able to continuously record the force during the impact. The maximum impact force can be calculated with the following equation:

$$F_{\max} = mg\left(1 + \sqrt{1 + \frac{2hk}{mg}}\right)$$

Where:

$F_{max}$ = Theoretical maximum force registered by the load cell in N
$m$ = The mass of the weight in kg
$g$ = The standard gravity, 9.80665 m/s$^2$
$h$ = The drop height in m
$k$ = The spring rate in N/m

This theoretical value will be approximately 6.78 kN if the mass of the spring is added to m. When performing a test $F_{max}$ needs to be determined by means of a calibration, and according to the standard $F_{max}$ shall be $6.60 \pm 0.25$ kN.
The force reduction, R, is calculated with the following equation:

$$R = \left(1 - \frac{F_t}{F_r}\right) \cdot 100$$

Where:

$F_t$ = The measured maximum peak force for the test piece in N
$F_r$ = The reference force from calibration on concrete in N

Therefore the force reduction expresses how much better the tested floor absorbs the impact force than a concrete floor.

When tasting, three drops are made at the same spot. An average is then calculated from the last two drops.

**Description of preferred embodiments**

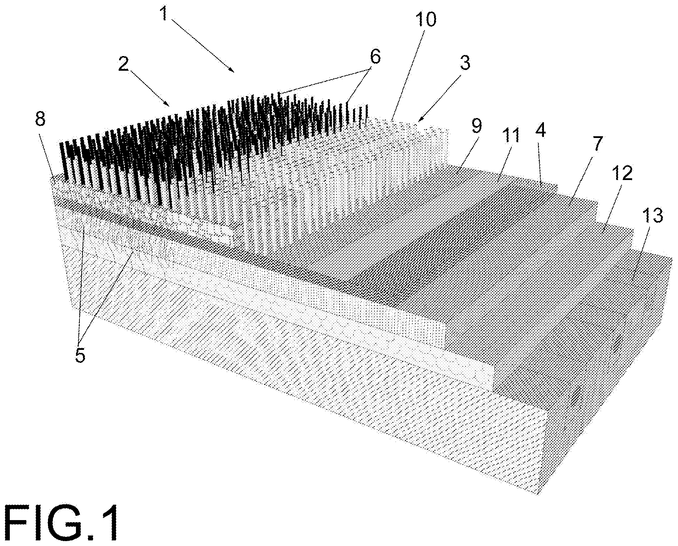

What follows is a description of the mixed turf system of the present invention making reference to figures 1 to 3.

The proposed system 1 of mixed turf includes turf of natural origin 2 and turf of synthetic origin 3 which are disposed on a substantially elastic permeable substrate 4. This substrate 4 is configured in such a way as to allow the passage of the roots 5 of the plants 6 of natural turf through to a growing layer 7 disposed in a lower position.

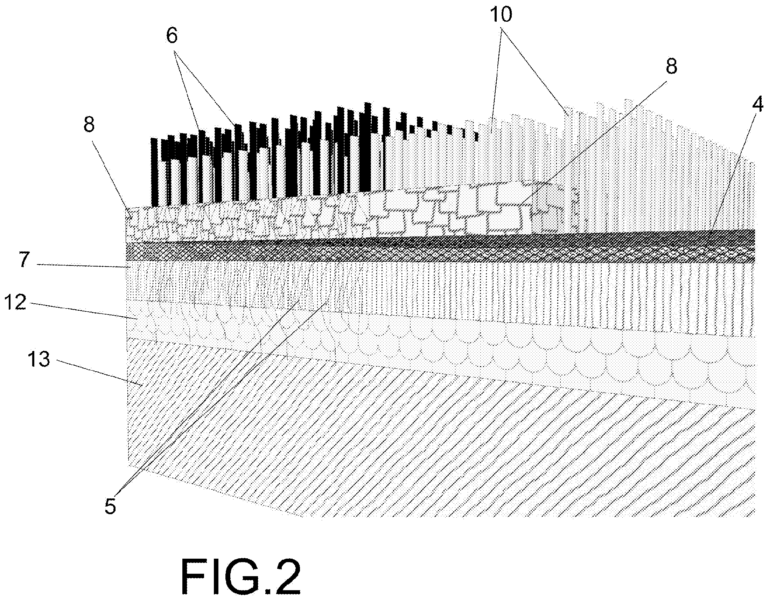

In the embodiment shown in figures 1 and 2, said substrate 4 is configured by a mesh of elastic synthetic material, specifically, a mesh of polyvinyl chloride or PVC which has a thickness of 10 mm and a substantially amorphous network structure (the latter is not shown in the figures) which facilitates the support of the roots 5 that pass through it.

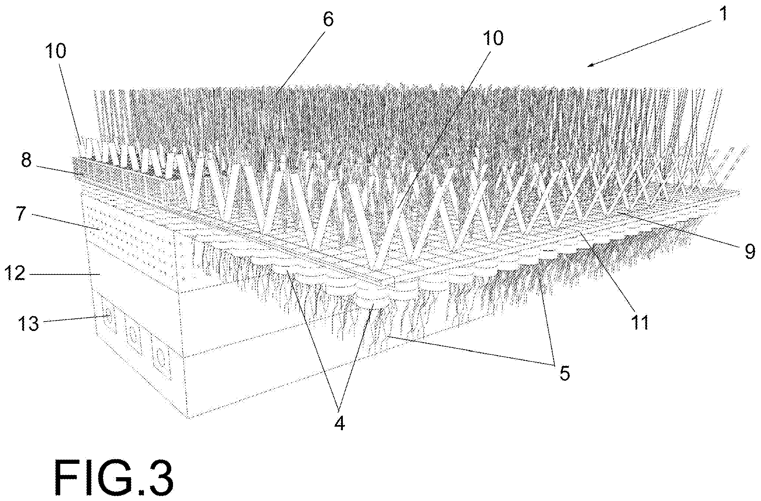

Nevertheless, the same substrate 4 may be configured by a different type of material with similar properties on condition that said material allows the roots 5 to pass through and is capable of absorbing the energy from shocks made on the surface. Figure 3 shows a profile of the system 1 which includes a schematic representation of an embodiment of the elastic permeable substrate 4 which does not form part of the present invention. This embodiment of the elastic substrate may be configured by a sheet manufactured with the copolymer styrene-butadiene rubber SBR, having a thickness between 5 and 20 mm, with a plurality of regular or amorphous holes that would allow passage of the roots without these holes destabilising the structural stability of said sheet.

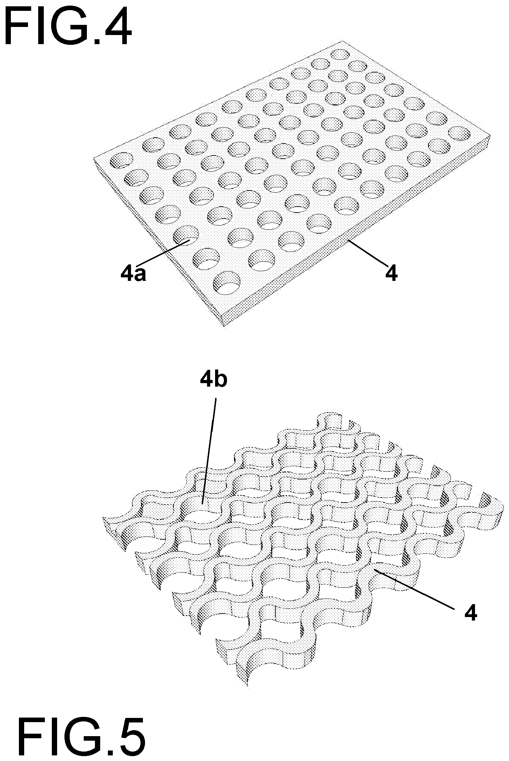

Figures 4 and 5 represent another two types of sheets or slabs of elastic material that can also be used as an elastic substrate 4 but they do not form part of the present claimed invention. These sheets may be manufactured on the basis of polyurethane foam, such as for example the sheets manufactured by the company Recticel Internacional, or manufactured on the basis of expanded polyethylene, such as for example the sheets manufactured by the companies Trocellen and Shmitz Foams Products. In all events, as may be seen from the drawings, the sheets incorporate through-holes 4a, 4b to allow passage through of the roots of the turf plants. These holes 4a, 4b may be distributed in a uniform manner, or not, on the surface of the sheet. They may also present a diversity of sections or shapes, different to those represented.

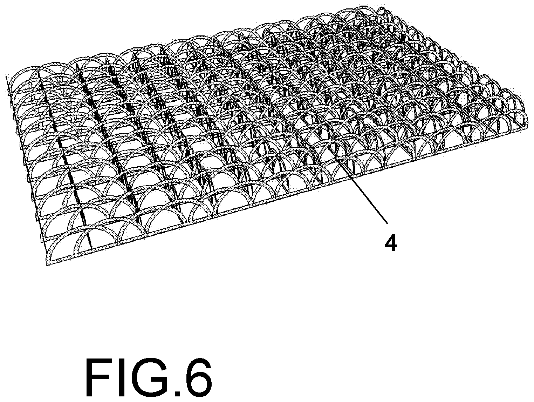

Figure 6 represents an embodiment of said elastic substrate 4 configured on the basis of a three-dimensional mesh formed by threads of elastic polymeric material which are fixed or joined to each other in such a way that they determine a final semi-amorphous structure such as the one represented. This semi-amorphous structure incorporates hollow spaces to allow passage of the roots. One example of this three-dimensional mesh is the one marketed with the name *Vinyl loop mat* by the company Notas Floor Mating.

As mentioned in the description of the invention, the elastic properties of the substrate 4 ensure the absorption of the energy from shocks made on the surface due to the effect, for example, of a sports game ball. In this way, compaction is avoided of the growing layer 7 of the roots 5 of the plants 6 of natural turf 2 disposed in a lower position.

In the described system 1 of mixed turf, the seeds of the plants 6 of natural turf 2 are placed on a layer 8 of filler soil of 5mm to 25mm in thickness which is disposed on a base 9 for supporting the synthetic fibres 10 of the turf 3 of synthetic or artificial origin. The layer 8 of filler soil has the function only of stabilising the synthetic fibres 10 and of supporting the seeds of natural turf 2.

With regards to the base 9 for supporting the synthetic fibres 10, this base 9 is configured in such a way as to allow the passage of the roots 5 of the plants 6 through to the elastic substrate 4. In the described embodiments, the base 9 is manufactured on the basis of material of synthetic origin of the type polyethylene or polypropylene and is provided with perforations (not represented) to allow passage of the roots 5.

As shown in figure 1, the elastic substrate 4 is protected or separated from the layer 8 of filler soil by a sheet of fabric 11 permeable to water, which is disposed beneath the base 9 for supporting the synthetic fibres 10. This fabric 11 has the function of preventing the particles of soil of the layer 8 of fill from blocking the pores of the elastic substrate 4.

In the described embodiments, the fabric 11 is a non woven geotextile fabric of polyester fibres with a density of 0.2 Kg/m$^2$ (200 gr/m$^2$) and a pore size of 60 $\mu$m or 0.06 mm. It has been verified that this density is optimal for allowing the passage of roots 5 while at the same time preventing the passage of soil particles.

Thanks to the aforementioned geotextile fabric 11, the elastic substrate 4 remains with its pores filled with air defining in the profile of the system a layer of 0.01 m (10 mm) thickness with an apparent bulk density of 350 Kg/m$^3$. This density is appropriate for providing growing conditions that are very similar to those of hydroponic cultivation which drastically reduce the proliferation of fungi and pathogenic bacteria which affect the plants 6 of natural turf 2. Another advantage of the geotextile fabric 11 lies in the fact that it prevents insect larvae from the layer 8 of filler soil reaching the growing layer 7 below.

The aforementioned growing layer 7 below is a layer between 50 and 200 mm thick which is formed by a mixture of sand, organic matter, basal granular fertilisers and granules of elastic material with a diameter comprised between 0.5 mm and 4 mm.

The function of this layer 7 is to grow the natural turf 2, as its name indicates, given that it allows the roots 5 to grow by providing them with the nutrients and with the space necessary for said roots 5 to be able to grow. The aforesaid elastic granules help to avoid compaction of the soil.

As mentioned in the description of the invention, because the growing layer 7 of the plants 5 of turf 2 is in a position below that of the synthetic turf 3, said growing layer 7, and with it the roots 5 of the plants 6 of natural turf 2, are protected from the forces that cause tear or lifting of the turf. This fact contributes to making it possible for the system 1 of mixed turf of the present invention to be used for a higher number of hours than the natural turf 2 without sustaining tears or lifting.

As may be seen from figures 1 to 3, the growing layer 7 is disposed on subsoil 12 wherein its base includes drainage channels 13 for water.

The method for cultivating the mixed turf according to the claimed system 1 includes a first stage of sowing wherein the seeds of the plants 6 of natural turf 2 are placed in the layer 8 of filler soil at a height comprised between 0.5 mm and 20 mm.

The seeds of natural turf 2 germinate and its plants 6 are allowed to grow up to a height that is equal to or higher than the height of the synthetic fibres 10 of the artificial turf 3. Growth of the plants 6 is nourished by the roots 5 which reach the lower growing layer 7 by passing through the base 9 for supporting the synthetic fibres 10 (through its holes), the geotextile fabric 11 and the elastic substrate 4 (see figures).

Depending on the type of sport to be practiced, the height for cutting the plants 6 of natural turf 2 may vary, but in general, the recommended height will be comprised between 15 mm and 40 mm, depending also on the height of the fibres 10 of artificial or synthetic turf 3, preferably ensuring that the plants 6 of natural turf remain above the synthetic fibres 10.

Given that all the layers of the profile of the system 1 are permeable to water, irrigation and drainage are carried out as normal without the risk of water logging. Also, the high content of air of the elastic substrate 4 (low apparent bulk density of the layer) guarantees correct aeration of the roots 5 of the plants 6, avoiding the appearance of common fungal diseases in the neck of the plants of turf.

As mentioned previously, periodically, clearing and cleaning operations of the layer 8 of filler soil will be carried out in order to remove the "thatch" or layer of decomposing organic matter. These operations replace conventional scarification. Because the layer 8 of filler soil has a very limited thickness, the scarification operation may be replaced by simpler processes which are less aggressive (simply raking the soil).

Next is a description of a test carried out in a laboratory on a profile of the claimed system 1 which has proven the capacity for the roots of the plants 6 of natural turf 2 to take hold over the fibres 10 of artificial or synthetic turf.

The tested profile was made of the following materials:

- perforated base 9 of polyethylene for supporting the synthetic fibres 10.
- synthetic fibres 10 made of fibrillated polyethylene sewn to the perforated base 9. The height of the fibres 10 for the test was 20 mm.
- geotextile fabric 11 non woven made of polyester with a thickness of 1.2 mm, a fibre density of 200 gr/m$^2$ and a pore size of 60 $\mu$m. The chosen fabric 11 is permeable to water.
- elastic substrate 4 configured by a three-dimensional mesh of polyvinyl chloride PVC with a thickness of 10 mm with an amorphous network structure and an apparent bulk density of 350 Kg/m$^3$.
- layer 8 of filler soil of 10mm thick for sowing the seeds of the plants 6.
- growing layer 7 of 85 mm thick for growth of the roots 5.

The seeds of the plants 6 of natural turf were sown homogeneously on the layer 8 of filler soil. Once sown, fertilisers were applied. After 5 days the first green shoots appeared.

One month later, it was observed that the roots 5 had completely passed through the supporting base 9, the geotextile fabric 11 and the elastic substrate 4 used in the test. Specifically, it was observed that the roots 5 had been able to perforate or pass through the non-woven geotextile fabric 11 reaching the three-dimensional mesh of the substrate 9. The roots 5 grew free of particles of filler soil in the space created by the mesh of the substrate 4. Consequently, it was verified that effectively, the elastic substrate 9, protected by the geotextile fabric 11 configures a medium similar to that of hydroponic cultivation (without soil) of the roots 5.

One month and a half after the start of the test, it was noted that the plants 6 of natural turf 2 covered 100% of the surface and that the synthetic fibres 10 of the artificial turf were practically invisible.

Two months after the start of the test, the strength of the plants 6 of natural turf 2 was evident and the roots 5 showed considerable density and thickness reaching the lower growing layer 7.

Although reference has been made to a specific embodiment of the invention, it is obvious for a person skilled in the art that the described system 1 is subject to numerous variations and modifications, and that all the details mentioned may be replaced by others which are technically equivalent, without departing from the scope of protection defined by the attached claims.

**Claims**

1. System (1) of turf for sports surfaces and gardening surfaces which comprises turf (3) of synthetic origin and turf (2) of natural origin, said turf (3) of synthetic origin and said turf (2) of natural origin being disposed on a substantially elastic permeable substrate (4), said elastic substrate (4) being configured in such a way that it allows passage of the roots (5) of said natural turf (2) through to a growing layer (7) disposed in a lower position, **characterized in that** said elastic substrate (4) defines in the profile of the system (1) a layer having a thickness comprised between 0.005 m to 0.020 m, **and in that** said elastic substrate (4) is configured on the basis of a three-dimensional mesh which is manufactured with elastic material of polymeric origin, said elastic substrate (4) being capable of absorbing the energy from shocks made on said surfaces in order to avoid compaction of said growing layer (7) of the roots (5) disposed in a lower position.

2. System according to claim 1, which comprises a layer (8) of filler soil disposed on a base (9) for supporting the fibres (10) of turf of synthetic origin, with it being possible to sow the seeds of natural turf (2) on said layer (8) of filler soil, the base (9) for supporting said synthetic fibres (10) being configured in such a way as to allow the roots (5) of natural turf (2) to pass through to the elastic substrate (4) disposed in a lower position.

3. System according to claim 2, which comprises a sheet of material (11) permeable to water which is placed between said layer (8) of filler soil and said substantially elastic substrate (4), said sheet being configured in such a way as to prevent the passage of particles of filler soil through to the elastic substrate (4) disposed in a lower position, with said fabric (11) being able to allow passage of the roots (5) of said natural turf (2).

4. System according to claim 3, wherein said permeable layer is a geotextile fabric (11) which is configured to allow passage of the roots (5) of said natural turf (2).

5. System according to claim 4, wherein said geotextile fabric (11) comprises a mesh of fibres provided with pores having a diameter that is equal to or less than 0.0001 m (100 $\mu$m), said pores being suitable for allowing passage of the roots (5) and preventing passage of the particles of soil capable of blocking the pores of the elastic substrate (4).

6. System according to claim 5, wherein said geotextile fabric (11) is a non woven fabric, preferably a non woven fabric with a density of fibres that is equal to or less than 0.3 Kg/m$^2$ (300 g/m$^2$).

7. System according to claim 1, wherein said substantially elastic substrate (4) defines in the profile of the system (1) a layer with a thickness comprised between 0.005 m (5 mm) and 0.02 m (20 mm), the apparent bulk density of this layer of substrate being equal to or less than 500 Kg/m$^3$ when it is protected by the sheet of permeable fabric (11) with a view to guaranteeing an optimum content of air.

8. System according to any of claims 1 or 7, wherein said substantially elastic permeable substrate (4) is configured in such a way as to be capable of absorbing the energy of shocks made on the surface by the effect of the ball or other similar object according to the minimum values established under European Norm EN-15330-1 for sports surfaces, in particular said substrate is configured in such a way as to allow a mixed or natural turf to be obtained with a shock-absorption capacity comprised within the range of values (55%-70%) established by said European Norm, according to test UNE-EN 14808:2005.

9. System according to claim 2, wherein the fibres (10) of said synthetic turf (3) possess a height comprised between 0.015 m (15 mm) and 0.035 m (35 mm) and said layer (8) of filler soil a thickness comprised between 0.005 m (5 mm) and 0.025 m (25 mm).

**10.** System according to claim 1, wherein said growing layer (7) possesses a height comprised between 0.05 m (50 mm) and 0.20 m (200 mm).

**11.** System according to claim 9, wherein said growing layer (7) includes particles of elastic material of natural or synthetic origin with a diameter comprised between 0.5 mm and 4 mm.

**12.** Method for cultivating turf according to the system of claims 1 to 11, which comprises the stages of;

    a) sowing the seeds of natural turf (2) on a layer (8) of filler soil disposed on a base (9) for supporting the fibres (10) of turf (3) of synthetic origin and on a substantially elastic permeable substrate (4), which is configured on the basis of a three-dimensional mesh, said elastic substrate (4) defining in the profile of the system (1) a layer having a thickness comprised between 0.005 m and 0.020 m,
    b) allowing the natural turf (2) to grow up to a height that is equal to or higher than the height of the fibres (10) of the synthetic turf (3), the roots (5) of said natural turf (2) being capable of passing through the base (9) for supporting the fibres (10) of synthetic turf (3) and passing through said elastic substrate (9) in order to reach a growing layer (7) disposed in a lower position,
    c) cutting the plants (6) of natural turf (2) to maintain a height of said natural turf (2) that is at least equal to that of the fibres (10) of synthetic turf (3), in particular, to maintain said natural turf (2) at a height comprised between 0.015 m (15 mm) and 0.040 m (40 mm), depending on the use to be given to the surface.

**13.** Method of cultivation according to claim 12, wherein, in stage a) the sowing of the seeds is carried out on a layer (8) of filler soil with a thickness comprised between 0.005 m (5 mm) and 0.025 m (25 mm) which is separated from the elastic substrate (4) by a permeable sheet (11) which prevents the passage of soil particles, the roots (5) of the natural turf (2) being capable of passing through said permeable sheet (11) to penetrate the substrate (4) while said substrate (4) is kept free from soil particles.

**14.** Method of cultivation according to either of claims 12 or 13, which comprises the stage of clearing and cleaning said layer (8) of filler soil without scarifying.

## Patentansprüche

**1.** System (1) aus Rasen für Sportoberflächen und Gartenoberflächen, das Rasen (3) synthetischen Ursprungs und Rasen (2) natürlichen Ursprungs aufweist, wobei der Rasen (3) synthetischen Ursprungs und der Rasen (2) natürlichen Ursprungs auf einem im Wesentlichen elastischen durchlässigen Substrat (4) angeordnet sind, wobei das elastische Substrat (4) so konfiguriert ist, dass es den Durchgang der Wurzeln (5) des natürlichen Rasens (2) hindurch zu einer Wachstumsschicht (7) ermöglicht, die in einer tieferen Position angeordnet ist, **dadurch gekennzeichnet, dass** das elastische Substrat (4) in dem Profil des Systems (1) eine Schicht mit einer Dicke definiert, die zwischen 0,005 m bis 0,020 m liegt, und dadurch, dass das elastische Substrat (4) auf der Basis eines dreidimensionalen Gitters konfiguriert ist, das mit elastischem Material polymeren Ursprungs hergestellt ist, wobei das elastische Substrat (4) in der Lage ist, die Energie von Stößen zu absorbieren, die auf die Oberfläche ausgeübt werden, um eine Verdichtung der Wachstumsschicht (7) der Wurzeln (5) zu vermeiden, die in einer tieferen Position angeordnet ist.

**2.** System gemäß Anspruch 1, das eine Schicht (8) aus Füllboden aufweist, die auf einer Basis (9) angeordnet ist zum Tragen der Fasern (10) des Rasens synthetischen Ursprungs, wobei es möglich ist, die Samen des natürlichen Rasens (2) auf die Schicht (8) aus Füllboden zu säen, wobei die Basis (9) zum Tragen der synthetischen Fasern (10) so konfiguriert ist, um es zu ermöglichen, dass die Wurzeln (5) des natürlichen Rasens (2) durchgehen zu dem elastischen Substrat (4), das in einer tieferen Position angeordnet ist.

**3.** System gemäß Anspruch 2, das eine Lage aus Material (11) aufweist, das wasserdurchlässig ist, die zwischen der Schicht (8) aus Füllboden und dem im Wesentlichen elastischen Substrat (4) platziert ist, wobei die Lage so konfiguriert ist, um den Durchgang von Partikeln des Füllbodens zu dem elastischen Substrat (4) zu verhindern, das in einer tieferen Position angeordnet ist, wobei das Gewebe (11) in der Lage ist, einen Durchgang der Wurzeln (5) des natürlichen Rasens (2) zu ermöglichen.

**4.** System gemäß Anspruch 3, bei dem die durchlässige Schicht ein Geotextilgewebe (11) ist, das konfiguriert ist, um einen Durchgang der Wurzeln (5) des natürlichen Rasens (2) zu erlauben.

**5.** System gemäß Anspruch 4, bei dem das Geotextilgewebe (11) ein Gitter aus Fasern aufweist, das mit Poren versehen ist mit einem Durchmesser, der gleich oder geringer als 0,0001 m (100 μm) ist, wobei die Poren geeignet sind zum Ermöglichen eines Durchgangs der Wurzeln (5) und zum Verhindern des Durchgangs der Bodenpartikel, die in der Lage sind, die Poren des elastischen Substrats (4) zu verstopfen.

**6.** System gemäß Anspruch 5, bei dem das Geotextilgewebe (11) ein Vliesgewebe ist, vorzugsweise ein Vliesgewebe mit einer Dichte von Fasern, die gleich oder geringer als 0,3 Kg/m$^2$ (300 g/m$^2$) ist.

**7.** System gemäß Anspruch 1, bei dem das im Wesentlichen elastische Substrat (4) in dem Profil des Systems (1) eine Schicht mit einer Dicke definiert, die zwischen 0,005 m (5 mm) und 0,02 m (20 mm) liegt, wobei die offensichtliche Fülldichte dieser Substratschicht gleich oder geringer als 500 Kg/m$^3$ ist, wenn dieselbe durch die Lage aus durchlässigem Gewebe (11) geschützt wird, mit dem Ziel, einen optimalen Luftgehalt zu garantieren.

**8.** System gemäß einem der Ansprüche 1 bis 7, bei dem das im Wesentlichen elastische durchlässige Substrat (4) so konfiguriert ist, um in der Lage zu sein, die Energie von Stößen zu absorbieren, die auf die Oberfläche ausgeübt werden durch Auswirkungen des Balls oder eines ähnlichen Objekts gemäß den Minimalwerten, die in der europäischen Norm EM-15330-1 für Sportoberflächen festgelegt sind, insbesondere ist das Substrat so konfiguriert, um es zu ermöglichen, dass ein gemischter oder natürlicher Rasen erhalten wird mit einer Stoßdämpfungsfähigkeit, die innerhalb des Wertebereichs (55%-70%) liegt, der durch die europäische Norm gemäß Test UNE-EN 14808:2005 festgelegt wurde.

**9.** System gemäß Anspruch 2, bei dem die Fasern (10) des synthetischen Rasens (3) eine Höhe aufweisen, die zwischen 0,015 m (15 mm) und 0,035 m (35 mm) liegt und die Schicht (8) aus Füllboden eine Dicke aufweist, die zwischen 0,005 m (5 mm) und 0,025 m (25 mm) liegt.

**10.** System gemäß Anspruch 1, bei dem die Wachstumsschicht (7) eine Höhe aufweist, die zwischen 0,05 m (50 mm) und 0,20 m (200 mm) liegt.

**11.** System gemäß Anspruch 9, bei dem die Wachstumsschicht (7) Partikel aus elastischem Material natürlichen oder synthetischen Ursprungs aufweist mit einem Durchmesser, der zwischen 0,5 mm und 4 mm liegt.

**12.** Verfahren zum Kultivieren von Rasen gemäß den Systemen gemäß den Ansprüchen 1 bis 11, das folgende Schritte aufweist:

a) Säen der Samen von natürlichem Rasen (2) auf einer Schicht (8) aus Füllboden, der auf einer Basis (9) angeordnet ist zum Tragen der Fasern (10) eines Rasens (3) synthetischen Ursprungs und auf einem im Wesentlichen elastischen durchlässigen Substrat (4), das auf der Basis eines dreidimensionalen Gitters konfiguriert ist, wobei das elastische Substrat (4) in dem Profil des Systems (1) eine Schicht definiert mit einer Dicke, die zwischen 0,005 m und 0,020 m liegt,
b) Ermöglichen, dass der natürliche Rasen (2) bis zu einer Höhe wächst, die gleich oder höher ist als die Höhe der Fasern (10) des synthetischen Rasens (3), wobei die Wurzeln (5) des natürlichen Rasens (2) in der Lage sind, durch die Basis (9) durchzugehen zum Tragen der Fasern (10) des synthetischen Rasens (3) und durch das elastische Substrat (9) durchzugehen, um eine Wachstumsschicht (7) zu erreichen, die in einer tieferen Position angeordnet ist,
c) Schneiden der Pflanzen (6) des natürlichen Rasens (2), um eine Höhe des natürlichen Rasens (2) beizubehalten, die zumindest gleich derjenigen ist der Fasern (10) des synthetischen Rasens (3), insbesondere um den natürlichen Rasen (2) bei einer Höhe beizubehalten, die zwischen 0,015 m (15 mm) und 0,040 m (40 mm) liegt, abhängig von der Nutzung, für die die Oberfläche beabsichtigt ist.

**13.** Verfahren der Kultivierung gemäß Anspruch 12, bei dem bei Schritt a) das Säen der Samen auf einer Schicht (8) aus Füllboden ausgeführt wird mit einer Dicke, die zwischen 0,005 m (5 mm) und 0,025 (25 mm) liegt, die von dem elastischen Substrat (4) durch eine durchlässige Lage (11) getrennt ist, die den Durchgang von Bodenpartikeln verhindert, wobei die Wurzeln (5) des natürlichen Rasens (2) in der Lage sind, durch die durchlässige Lage (11) durchzugehen, um durch das Substrat (4) zu dringen, während das Substrat (4) freigehalten wird von Bodenpartikeln.

14. Verfahren der Kultivierung gemäß einem der Ansprüche 12 oder 13, das den Schritt des Säuberns und Reinigens der Schicht (8) aus Füllboden ohne Aufreißen aufweist.

**Revendications**

1. Système (1) de pelouse pour les surfaces destinées au sport et les surfaces de jardinage comprenant de la pelouse (3) d'origine synthétique et de la pelouse (2) d'origine naturelle, ladite pelouse (3) d'origine synthétique et ladite pelouse (2) d'origine naturelle étant disposées sur un substrat perméable substantiellement élastique (4), ledit substrat élastique (4) étant configuré de telle sorte qu'il permette le passage des racines (5) de ladite pelouse naturelle (2) vers une couche en cours de croissance (7) disposée dans une position plus basse, **caractérisé en ce que** ledit substrat élastique (4) définit dans le profil du système (1) une couche d'une épaisseur comprise entre 0,005 m et 0,020 m, **et en ce que** ledit substrat élastique (4) est configuré sur la base d'un maillage tridimensionnel fabriqué dans un matériau élastique d'origine polymérique, ledit substrat élastique (4) étant capable d'absorber l'énergie des chocs sur lesdites surfaces afin d'éviter le compactage de ladite couche en cours de croissance (7) des racines (5) disposées dans une position plus basse.

2. Système selon la revendication 1, comprenant une couche (8) de terre de remblai disposée sur une base (9) de support des fibres (10) de la pelouse d'origine synthétique, avec la possibilité de semer les graines de la pelouse naturelle (2) sur ladite couche (8) de terre de remblai, la base (9) de support desdites fibres synthétiques (10) étant configurée de telle sorte qu'elle permette aux racines (5) de la pelouse naturelle (2) de passer à travers le substrat élastique (4) disposé dans une position plus basse.

3. Système selon la revendication 2, comprenant une pellicule de matériau (11) perméable à l'eau placée entre ladite couche (8) de terre de remblai et ledit substrat substantiellement élastique (4), ladite pellicule étant configurée de telle sorte qu'elle empêche le passage de particules de terre de remblai à travers le substrat élastique (4) disposé dans une position plus basse, ledit tissu (11) pouvant permettre le passage des racines (5) de ladite pelouse naturelle (2).

4. Système selon la revendication 3, dans lequel ladite couche perméable est un tissu géotextile (11) configuré pour permettre le passage des racines (5) de ladite pelouse naturelle (2).

5. Système selon la revendication 4, dans lequel ledit tissu géotextile (11) comprend un maillage de fibres munies de pores d'un diamètre égal ou inférieur à 0,0001 m (100 μm), lesdits pores étant adaptés pour permettre le passage des racines (5) et empêcher le passage des particules de terre pouvant boucher les pores du substrat élastique (4).

6. Système selon la revendication 5, dans lequel le tissu géotextile (11) est un tissu non tissé, de préférence un tissu non tissé d'une densité de fibres égale ou inférieure à 0,3 Kg/m$^2$ (300 g/m$^2$).

7. Système selon la revendication 1, dans lequel le substrat substantiellement élastique (4) définit dans le profil du système (1) une couche d'une épaisseur comprise entre 0,005 m (5 mm) et 0,02 m (20 mm), la masse volumique apparente de cette couche de substrat étant égale ou inférieure à 500 Kg/m$^3$ lorsqu'elle est protégée par la pellicule de tissu perméable (11) en vue de garantir une teneur en air optimale.

8. Système selon une quelconque des revendications 1 ou 7, dans lequel ledit substrat substantiellement élastique (4) est configuré de telle sorte qu'il soit capable d'absorber l'énergie des chocs portés à la surface par le ballon ou autre objet similaire selon les valeurs minimales établies par la Norme Européenne EN-15330-1 pour les surfaces destinées au sport, ledit substrat est en particulier configuré de telle sorte qu'il permet d'obtenir une pelouse mixte ou naturelle avec une capacité d'absorption des chocs comprise dans la gamme de valeurs (55%-70%) établie par ladite Norme Européenne, selon le test UNE-EN 14808:2005.

9. Système selon la revendication 2, dans lequel les fibres (10) de ladite pelouse synthétique (3) possèdent une hauteur comprise entre 0,015 m (15 mm) et 0,035 m (35 mm) et ladite couche (8) de terre de remblai, une épaisseur comprise entre 0,005 m (5 mm) et 0,025 m (25 mm).

10. Système selon la revendication 1, dans lequel ladite couche en cours de croissance (7) possède une hauteur comprise entre 0,05 m (50 mm) et 0,20 m (200 mm).

**11.** Système selon la revendication 9, dans lequel ladite couche en cours de croissance (7) comprend des particules de matériau élastique d'origine naturelle ou synthétique avec un diamètre compris entre 0,5 mm et 4 mm.

**12.** Procédé de culture de pelouse selon le système des revendications 1 à 11, comprenant les étapes de :

a) semer les graines de pelouse naturelle (2) sur une couche (8) de terre de remblai disposée sur une base (9) de support des fibres (10) de la pelouse (3) d'origine synthétique et sur un substrat perméable substantiellement élastique (4), configuré sur la base d'un maillage tridimensionnel, ledit substrat élastique (4) définissant dans le profil du système (1) une couche d'une épaisseur comprise entre 0,005 m et 0,020 m,

b) permettre à la pelouse naturelle (2) de pousser jusqu'à une hauteur égale ou supérieure à la hauteur des fibres (10) de la pelouse synthétique (3), les racines (5) de ladite pelouse naturelle (2) pouvant passer à travers la base (9) de support des fibres (10) de la pelouse synthétique (3) et passer à travers ledit substrat élastique (9) afin d'atteindre la couche en cours de croissance (7) disposée dans une position plus basse.

c) couper les plants (6) de pelouse naturelle (2) pour maintenir une hauteur de ladite pelouse naturelle (2) qui soit au moins égale à celle des fibres (10) de la pelouse synthétique (3),en particulier, pour maintenir ladite pelouse naturelle (2) à une hauteur comprise entre 0,015 m (15 mm) et 0,040 m (40 mm), en fonction de l'utilisation que l'on fera de la surface.

**13.** Procédé de culture selon la revendication 12, dans lequel, à l'étape a), le semis des graines est réalisé sur une couche (8) de terre de remblai d'une épaisseur comprise entre 0,005 m (5 mm) et 0,025 m (25 mm) séparée du substrat élastique (4) par une pellicule perméable (11) empêchant le passage des particules de terre, les racines (5) de la pelouse naturelle (2) pouvant passer à travers ladite pellicule perméable (11) afin de pénétrer le substrat (4) tandis que ledit substrat (4) est protégé des particules de terre.

**14.** Procédé de culture selon une quelconque des revendications 12 ou 13, comprenant l'étape de nettoyage et de lavage de ladite couche (8) de terre de remblai sans scarification.

FIG.1

FIG.2

EP 2 956 583 B1

FIG.3

EP 2 956 583 B1

# FIG.4

4a

4

4b

4

# FIG.5

**4**

# FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5489317 A